# EUROPEAN PATENT APPLICATION

(11) **EP 4 361 516 A1**
(43) Date of publication of application: **01.05.2024**
(21) Application number: 23206195.2
(22) Date of filing: 26.10.2023
(51) Int. Cl.: F24F 11/64, F24F 11/77, F24F 110/12, F24F 140/12

(54) **CONTROL DEVICE AND METHOD FOR DC FAN OF AIR SOURCE HEAT PUMP SYSTEM/AIR CONDITIONING SYSTEM**

(30) Priority: 26.10.2022 CN 202211321468
(71) Applicant: Guangdong Carrier Heating, Ventilation And Air Conditioning Co., Ltd., Foshan Guangdong 528244 (CN)
(72) Inventor: LIAO, Zhenhua, Foshan, Guangdong 528244 (CN); CHEN, Yongxin, Foshan, Guangdong 528244 (CN)
(74) Representative: Dehns

(57) **Abstract**

Provided in the present invention are a control device and method for a DC fan of an air source heat pump system/air conditioning system, the method comprising the steps of presetting a heat exchanger to be on an evaporating side and on a condensing side, respectively, and presetting a dataset of preset target pressure values at different ambient temperatures; judging whether the DC fan is on the evaporating side or on the condensing side; according to a judgment result of a judgment module (3), an ambient temperature of an environment in which the DC fan operates and the dataset of preset target pressure values, obtaining a preset target pressure value of the heat exchanger corresponding in position to the DC fan at the ambient temperature; detecting an actual pressure Pa of the heat exchanger; and adjusting the speed of the DC fan according to a comparison result between the actual pressure Pa and the preset target pressure value. The method of the present invention enables the speed of the DC fan in a reasonable interval, improving the energy efficiency of the system and the accuracy of speed adjustment of the DC fan.

## Description

### Field of the Invention

The present invention relates to the technical field of air conditioning, in particular to a control device and method for a DC fan of an air source heat pump system/air conditioning system.

### Background of the Invention

In an air source heat pump system or air conditioning system, the speed of a DC fan is usually adjusted by detecting an inlet/outlet/middle portion temperature of a heat exchanger on a fan side (an indoor fan corresponding to an indoor side heat exchanger, and an outdoor side fan corresponding to an outdoor side heat exchanger), and increasing or decreasing the speed of a motor of the DC fan according to a comparison between a target temperature and the inlet/outlet/middle portion temperature. However, this control method is too general. For example, when an outdoor temperature is high but the outdoor side DC fan is on a condensing side or the outdoor temperature is low but the outdoor side fan is on an evaporating side, even if an output capacity of the air source heat pump system/air conditioning system is decreased (that is, the frequency of a compressor is decreased), the outdoor side DC fan will operate at a higher speed. This leads to an increase in energy consumption of the motor of the DC fan, while the air source heat pump system/air conditioning system is not at the optimal operating state.

The reasons for the above problems are as follows. System pressure values cannot be fed back in real time by detecting the inlet/outlet/middle portion temperature of the heat exchanger on the DC fan side. When the speed of the DC motor is adjusted according to the comparison between the target temperature and the inlet/outlet/middle portion temperature of the heat exchanger on the fan side, there is always a problem that an ambient temperature does not reach the target temperature. As a result, the motor of the DC fan always operates at the highest speed; however, in fact, the heat exchange capacity is already enough. This leads to the waste of power consumption of the motor of the DC fan, while the air source heat pump system/air conditioning system is not at the optimal equilibrium operating state.

### Summary of the Invention

In view of the above problems, the present invention provides a control device and method for a DC fan of an air source heat pump system/air conditioning system. A target pressure value is preset in conjunction with an ambient temperature, and the speed of the DC fan is adjusted according to a comparison result between an actual pressure detected in real time and the preset target pressure value, so that the speed of the DC fan is kept in a reasonable interval, and the air source heat pump system/air conditioning system operates at a better energy efficiency, improving the accuracy of speed adjustment of the DC fan.

The present invention provides a control device for a DC fan of an air source heat pump system/air conditioning system, the DC fan being disposed corresponding in position to a heat exchanger, the control device including: a presetting module configured to preset the heat exchanger to be on an evaporating side and on a condensing side, respectively, and preset a dataset of preset target pressure values at different ambient temperatures; a judging module configured to judge whether the DC fan is on the evaporating side or on the condensing side in real time; a target pressure value acquisition module communicatively connected with the presetting module and the judgment module, the target pressure value acquisition module configured to, according to a judgment result of the judgment module, an ambient temperature of an environment in which the DC fan operates and the dataset of preset target pressure values, obtain a preset target pressure value of the heat exchanger corresponding in position to the DC fan at the ambient temperature; a pressure detection module configured to detect an actual pressure Pa of the heat exchanger in real time; and a control module communicatively connected with the pressure detection module and the target pressure value acquisition module, the control module configured to adjust the speed of the DC fan according to a comparison result between the actual pressure and the preset target pressure value.

By determining whether the DC fan is on the condensing side or on the evaporating side, and determining the preset target pressure value in conjunction with the ambient temperature, the present invention can adjust the preset target pressure value in real time according to a change in the ambient temperature, improving the accuracy of the preset target pressure value. By further adjusting the speed of the DC fan according to the comparison result between the actual pressure and the preset target pressure value, the present invention can adjust in real time the speed of the DC fan at different temperatures and states timely and quickly, improving the accuracy of speed adjustment. By detecting the pressure of the heat exchanger in real time, the pressure state of the system can be accurately fed back, so as to adjust the speed of the DC fan. This guarantees more accurate and precise control of the DC fan and the system, so that the speed of the DC fan is within a reasonable interval, to facilitate the air source heat pump air conditioning system/air conditioning system to operate within a better energy efficiency range, and prevent the DC fan from operating at the highest speed all the time, improving the stability and reliability of operation, and improving the accuracy of speed adjustment of the DC fan.

In an optional technical solution of the present invention, the relationship between the ambient temperature and the preset target pressure value is a linear relationship or a non-linear relationship.

According to this technical solution, the relationship between the ambient temperature and the preset target pressure value can be determined according to the actual situation, which improves the accuracy of "adjusting the speed of the DC fan according to the comparison result between the actual pressure and the preset target pressure value".

In an optional technical solution of the present invention, the device also includes: an operating mode detection module configured to detect an operating mode in which the air source heat pump system/air conditioning system operates; the judgment module communicatively connected with the operating mode detection module, the judgment module configured to judge whether the DC fan is on the evaporating side or on the condensing side according to the operating mode and the position of the DC fan.

In an optional technical solution of the present invention, the control module is configured to: when in the cooling mode, the DC fan is on the condensing side, the heat exchanger is an outdoor side condenser, the ambient temperature is an outdoor ambient temperature, and the preset target pressure value corresponding to the heat exchanger is Po, if Po + c < Pa, control the speed of the DC fan to increase by n revolutions per minute; if Po + d < Pa < Po + c, control the speed of the DC fan to increase by m revolutions per minute; if Po - e < Pa < Po, control the speed of the DC fan to decrease by m revolutions per minute; if Pa < Po - e, control the speed of the DC fan to decrease by n revolutions per minute; and if Po < Pa < Po + d, maintain the current speed; where, c, d, and e are all pressure value constants, and c > d, and n and m are constants, and n > m.

According to this technical solution, in the cooling mode, the speed of the outdoor side DC fan can be kept in a reasonable interval, and the system operates in a better energy equilibrium interval, which avoids energy waste. A speed adjustment range of the DC fan is controlled according to the comparison result between a difference between the actual pressure of the heat exchanger and the preset target pressure value and a preset value, which improves the precision of speed adjustment of the DC fan.

In an optional technical solution of the present invention, the control module is configured to: when in the cooling mode, the DC fan is on the evaporating side, the heat exchanger is an indoor side evaporator, the ambient temperature is an indoor ambient temperature, and the preset target pressure value corresponding to the heat exchanger is Pp', if Pp' + c < Pa, control the speed of the DC fan to decrease by n revolutions per minute; if Pp' + d < Pa < Pp' + c, control the speed of the DC fan to decrease by m revolutions per minute; if Pp' - e < Pa < Pp', control the speed of the DC fan to increase by m revolutions per minute; if Pa < Pp' - e, control the speed of the DC fan to increase by n revolutions per minute; and if Pp' < Pa < Pp' + d, maintain the current speed; where, c, d, and e are all pressure value constants, and c > d, and n and m are constants, and n > m.

According to this technical solution, in the cooling mode, the speed of the indoor side DC fan can be kept in a reasonable interval, the actual pressure of the heat exchanger is close to the preset target pressure value, the heat exchange capacities on the evaporating side and the condensing side are kept in balance, and the system operates in a better energy equilibrium interval, which avoids energy waste. Further, a speed adjustment range of the DC fan is controlled according to the comparison result between a difference between the actual pressure of the heat exchanger and the preset target pressure value and a preset value, which improves the precision of speed adjustment of the DC fan.

In an optional technical solution of the present invention, the control module is configured to: when in the heating mode, the DC fan is on the evaporating side, the heat exchanger is an outdoor side evaporator, the ambient temperature is an outdoor ambient temperature, and the preset target pressure value corresponding to the heat exchanger is Pp, if Pp + c < Pa, control the speed of the DC fan to decrease by n revolutions per minute; if Pp + d < Pa < Pp + c, control the speed of the DC fan to decrease by m revolutions per minute; if Pp - e < Pa < Pp, control the speed of the DC fan to increase by m revolutions per minute; if Pa < Pp - e, control the speed of the DC fan to increase by n revolutions per minute; and if Pp < Pa < Pp + d, maintain the current speed; where, c, d, and e are all pressure value constants, and c > d, and n and m are constants, and n > m.

According to this technical solution, in the heating mode, the speed of the outdoor side DC fan can be kept in a reasonable interval, the actual pressure of the heat exchanger is close to the preset target pressure value, the heat exchange capacities on the evaporating side and the condensing side are kept in balance, and the system operates in a better energy equilibrium interval, which avoids energy waste. Further, a speed adjustment range of the DC fan is controlled according to the comparison result between a difference between the actual pressure of the heat exchanger and the preset target pressure value and a preset value, which improves the precision of speed adjustment of the DC fan.

In an optional technical solution of the present invention, the control module is configured to: when in the heating mode, the DC fan is on the condensing side, the heat exchanger is an indoor side condenser, the ambient temperature is an indoor ambient temperature, and the preset target pressure value corresponding to the heat exchanger is Po', if Po' + c < Pa, control the speed of the DC fan to increase by n revolutions per minute; if Po' + d < Pa < Po' + c, control the speed of the DC fan to increase by m revolutions per minute; if Po' - e < Pa < Po', control the speed of the DC fan to decrease by m revolutions per minute; if Pa < Po' - e, control the speed of the DC fan to decrease by n revolutions per minute; and if Po' < Pa < Po' + d, maintain the current speed; where, c, d, and e are all pressure value constants, and c > d, and n and m are constants, and n > m.

According to this technical solution, in the heating mode, the speed of the indoor side DC fan can be kept in a reasonable interval, and the system operates in a better energy equilibrium interval, which avoids energy waste. Further, a speed adjustment range of the DC fan is controlled according to the comparison result between a difference between the actual pressure of the heat exchanger and the preset target pressure value and a preset value, which improves the precision of speed adjustment of the DC fan.

The present invention also provides a control method for a DC fan of an air source heat pump system/air conditioning system, the DC fan being disposed corresponding in position to a heat exchanger, the control method including the following steps: a presetting step: presetting the heat exchanger to be on an evaporating side and on a condensing side, respectively, and presetting a dataset of preset target pressure values at different ambient temperatures; a judgment step: judging whether the DC fan is on the evaporating side or on the condensing side; a target pressure value acquisition step: according to a judgment result of the judgment step, an ambient temperature of an environment in which the DC fan operates and the dataset of preset target pressure values, obtaining a preset target pressure value of the heat exchanger corresponding in position to the DC fan at the ambient temperature; a pressure detection step: detecting an actual pressure Pa of the heat exchanger; and a control step: adjusting, by a control module, the speed of the DC fan according to a comparison result between the actual pressure and the preset target pressure value.

In an optional technical solution of the present invention, the relationship between the ambient temperature and the target pressure value is a linear relationship or a non-linear relationship.

In an optional technical solution of the present invention, the method also includes a detection step: detecting an operating mode in which the air source heat pump system/air conditioning system operates; the judgment step judging whether the DC fan is on the evaporating side or on the condensing side according to the operating mode and the position of the DC fan.

### Brief Description of the Drawings

Embodiments of the invention will now be described, by way of example only, with reference to the accompanying drawings, wherein:
Fig. 1 is a schematic modular structural diagram of a control device for a DC motor of an air source heat pump system/air conditioning system.
Fig. 2 is a graph showing a relationship between an outdoor ambient temperature and a preset target pressure value Po in a cooling mode, where the DC fan is on a condensing side.
Fig. 3 is a schematic diagram of speed adjustment ranges of the DC fan in the cooling mode, where the DC fan is on the condensing side.
Fig. 4 is a graph showing a relationship between an outdoor ambient temperature and a preset target pressure value Pp in a heating mode, where the DC fan is on an evaporating side.
Fig. 5 is a schematic diagram of speed adjustment ranges of the DC fan in the heating mode, where the DC fan is on the evaporating side.
Fig. 6 is a schematic flow diagram of a control method for a DC motor of an air source heat pump system/air conditioning system.

### Reference signs:

presetting module 1; operating mode detection module 2; judgment module 3; ambient temperature detection module 4; target pressure value acquisition module 5; pressure detection module 6; and control module 7.

### Detailed Description of the Invention

The technical solutions in exemplary embodiments of the present invention are clearly and fully described below with reference to the accompanying drawings. It is clear that the described embodiments are merely some embodiments of the present invention rather than all the embodiments of the present invention. All other embodiments, obtained by persons of ordinary skill in the art based on the described embodiments of the present invention without creative efforts, shall fall within the protection scope of the present invention.

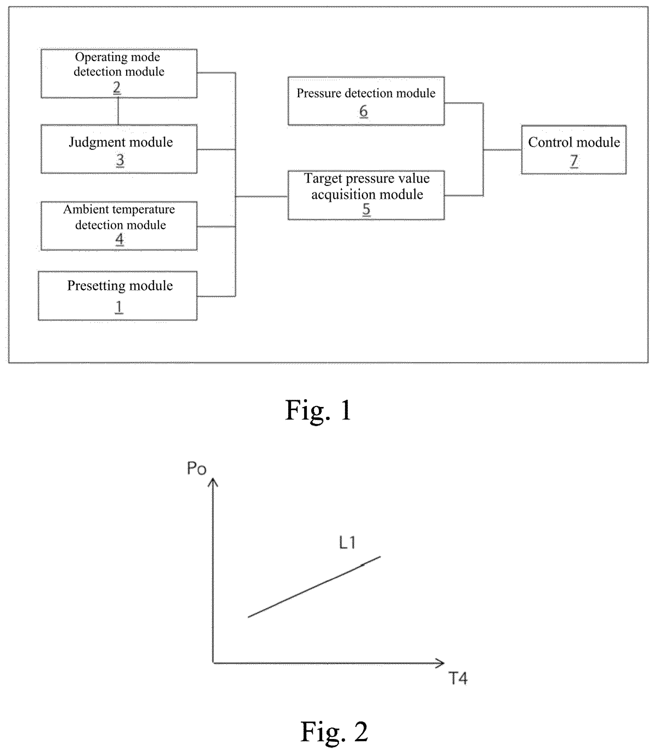

As shown in Fig. 1, the present invention provides a control device for a DC fan of an air source heat pump system/air conditioning system. The DC fan is disposed corresponding in position to a heat exchanger. The control device includes: a presetting module 1 configured to preset the heat exchanger to be on an evaporating side (the heat exchanger disposed corresponding to the DC fan serving to evaporate, i.e., the evaporating side) and a condensing side (the heat exchanger disposed corresponding to the DC fan serving to condense, i.e., the condensing side), respectively, and preset a dataset of preset target pressure values at different ambient temperatures; an operating mode detection module 2 configured to detect an operating mode in which the system operates; a judgment module 3 communicatively connected with the operating mode detection module 2, the judgment module 3 configured to judge whether the DC fan is on the evaporating side or on the condensing side in real time according to the operating mode and the position of the DC fan; an ambient temperature detection module 4 configured to detect an ambient temperature of an environment in which the DC fan operates in real time; a target pressure value acquisition module 5 communicatively connected with the presetting module 1, the judgment module 3 and the ambient temperature detection module 4, the target pressure value acquisition module 5 configured to, according to a judgment result of the judgment module 3, the ambient temperature and the dataset of preset target pressure values, obtain a preset target pressure value of the heat exchanger corresponding in position to the DC fan at the ambient temperature; a pressure detection module 6 configured to detect an actual pressure Pa of the heat exchanger in real time; and a control module 7 communicatively connected with the pressure detection module 6 and the target pressure value acquisition module 5, the control module 7 configured to adjust the speed of the DC fan according to a comparison result between the actual pressure Pa and the preset target pressure value.

According to the present embodiments, by determining whether the DC fan is on the condensing side or on the evaporating side according to the operating mode of the system and the position of the DC fan, and determining the preset target pressure value in conjunction with the ambient temperature, the preset target pressure value can be adjusted in real time according to a change in the ambient temperature, improving the accuracy of the preset target pressure values at different operating modes and different ambient temperatures. By further adjusting the speed of the DC fan according to the comparison result between the actual pressure and the preset target pressure value, the speed of the DC fan can be adjusted in real time at different temperatures and states timely and quickly, improving the accuracy of speed adjustment. By detecting the pressure of the heat exchanger in real time, the pressure state of the system can be accurately fed back, so as to adjust the speed of the DC fan. This guarantees more accurate and precise control of the DC fan and the system, so that the speed of the DC fan is within a reasonable interval, to facilitate the air source heat pump air conditioning system/air conditioning system to operate within a better energy efficiency range, and prevent the DC fan from operating at the highest speed all the time, improving the stability and reliability of operation, and improving the accuracy of speed adjustment of the DC fan.

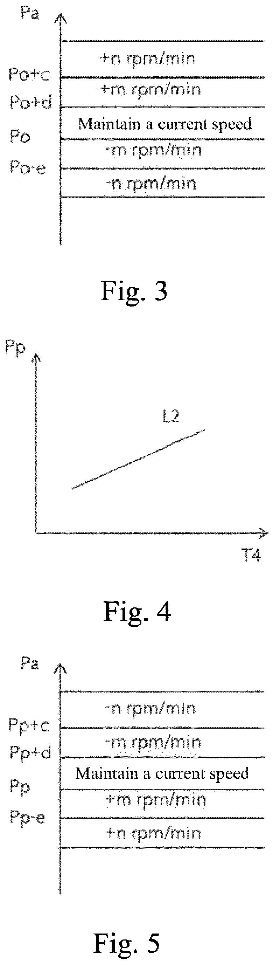

In a preferred embodiment of the present invention, the relationship between the ambient temperature and the preset target pressure value is a linear relationship or a non-linear relationship. The relationship between the ambient temperature and the preset target pressure value can be determined according to the actual situation, which improve the accuracy of "adjusting the speed of the DC fan according to the comparison result between the actual pressure and the preset target pressure value". As shown, Fig. 2 is a graph showing the relationship between an outdoor ambient temperature and a preset target pressure value Po, where the DC fan is on a condensing side. L1 can be a straight line, a multi-segment broken line, or a curved line, depending on a preset relationship. As shown, Fig. 4 is a graph showing the relationship between an outdoor ambient temperature and a preset target pressure value Pp in a heating mode, where the DC fan is on an evaporating side. Likewise, L2 can be a straight line, a multi-segment broken line, or a curved line.

In a preferred embodiment of the present invention, the control module 7 is configured to: when in the cooling mode, the DC fan is on the condensing side, the heat exchanger is an outdoor side condenser, the ambient temperature is an outdoor ambient temperature, and the preset target pressure value corresponding to the heat exchanger is Po, as shown in Fig. 3, if Po + c < Pa, control the speed of the DC fan to increase by n revolutions per minute; if Po + d < Pa < Po + c, control the speed of the DC fan to increase by m revolutions per minute; if Po - e < Pa < Po, control the speed of the DC fan to decrease by m revolutions per minute; if Pa < Po - e, control the speed of the DC fan to decrease by n revolutions per minute; and if Po < Pa < Po + d, maintain the current speed; where, c, d, and e are all pressure value constants, and c > d, and n and m are constants, and n > m.

In the cooling mode, the DC fan is an outdoor fan, the DC fan is on the condensing side, and the heat exchanger corresponding in position to the DC fan is an outdoor side condenser. The preset target pressure value is determined in conjunction with the ambient temperature, and the speed of the DC fan is adjusted in real time according to the actual pressure and the preset target pressure value, so that in the cooling mode, the speed of the outdoor side DC fan is kept in a reasonable interval, and the system operates in a better energy equilibrium interval, which avoids energy waste. Further, a speed adjustment range of the DC fan is controlled according to the comparison result between a difference between the actual pressure of the heat exchanger and the preset target pressure value and a preset value, which improves the precision of speed adjustment of the DC fan. It should be noted that the adjustment intervals of the speed in FIG. 3 of the present invention are merely examples, and more adjustment intervals and speed adjustment ranges can be set according to the actual situation.

In a preferred embodiment of the present invention, the control module 7 is configured to: when in the cooling mode, the DC fan is on the evaporating side, the heat exchanger is an indoor side evaporator, the ambient temperature is an indoor ambient temperature, and the preset target pressure value corresponding to the heat exchanger is Pp', if Pp' + c < Pa, control the speed of the DC fan to decrease by n revolutions per minute; if Pp' + d < Pa < Pp' + c, control the speed of the DC fan to decrease by m revolutions per minute; if Pp' - e < Pa < Pp', control the speed of the DC fan to increase by m revolutions per minute; if Pa < Pp' - e, control the speed of the DC fan to increase by n revolutions per minute; and if Pp' < Pa < Pp' + d, maintain the current speed; where, c, d, and e are all pressure value constants, and c > d, and n and m are constants, and n > m.

In the cooling mode, the DC fan is an indoor fan, the DC fan is on the evaporating side, and the heat exchanger corresponding in position to the DC fan is an indoor side evaporator. In the cooling mode, a speed adjustment scheme of the indoor fan is just opposite to a speed adjustment scheme of an outdoor fan, as shown in Fig. 5. When the actual pressure of the heat exchanger is greater than the preset target pressure value, the speed of the DC fan is controlled to decrease, and when the actual pressure of the heat exchanger is less than the preset target pressure value, the speed of the DC fan is increased, so that in the cooling mode, the speed of the indoor side DC fan is kept in a reasonable interval, the actual pressure of the heat exchanger is close to the preset target pressure value, the heat exchange capacities on the evaporating side and the condensing side are kept in balance, and the system operates in a better energy equilibrium interval, which avoids energy waste. Further, a speed adjustment range of the DC fan is controlled according to the comparison result between a difference between the actual pressure of the heat exchanger and the preset target pressure value and a preset value, which improves the precision of speed adjustment of the DC fan.

In a preferred embodiment of the present invention, the control module 7 is configured to: when in the heating mode, the DC fan is on the evaporating side, the heat exchanger is an outdoor side evaporator, the ambient temperature is an outdoor ambient temperature, and the preset target pressure value corresponding to the heat exchanger is Pp, as shown in Fig. 5, if Pp + c < Pa, control the speed of the DC fan to decrease by n revolutions per minute; if Pp + d < Pa < Pp + c, control the speed of the DC fan to decrease by m revolutions per minute; if Pp - e < Pa < Pp, control the speed of the DC fan to increase by m revolutions per minute; if Pa < Pp - e, control the speed of the DC fan to increase by n revolutions per minute; and if Pp < Pa < Pp + d, maintain the current speed; where, c, d, and e are all pressure value constants, and c > d, and n and m are constants, and n > m. It should be noted that the adjustment intervals of the speed in FIG. 3 of the present invention are merely examples, and more adjustment intervals and speed adjustment ranges can be set according to the actual situation.

In the heating mode, the DC fan is an outdoor fan, the DC fan is on the evaporating side, and the heat exchanger corresponding in position to the DC fan is an outdoor side evaporator. The speed of the DC fan is adjusted according to the comparison between the actual pressure of the heat exchanger and the preset target pressure value, so that in the heating mode, the speed of the outdoor side DC fan is kept in a reasonable interval, the actual pressure of the heat exchanger is close to the preset target pressure value, the heat exchange capacities on the evaporating side and the condensing side are kept in balance, and the system operates in a better energy equilibrium interval, which avoids energy waste. Further, a speed adjustment range of the DC fan is controlled according to the comparison result between a difference between the actual pressure of the heat exchanger and the preset target pressure value and a preset value, which improves the precision of speed adjustment of the DC fan.

In a preferred embodiment of the present invention, the control module 7 is configured to: when in the heating mode, the DC fan is on the condensing side, the heat exchanger corresponding in position to the DC fan is an indoor side condenser, the ambient temperature is an indoor ambient temperature, and the preset target pressure value corresponding to the heat exchanger is Po', if Po' + c < Pa, control the speed of the DC fan to increase by n revolutions per minute; if Po' + d < Pa < Po' + c, control the speed of the DC fan to increase by m revolutions per minute; if Po' - e < Pa < Po', control the speed of the DC fan to decrease by m revolutions per minute; if Pa < Po' - e, control the speed of the DC fan to decrease by n revolutions per minute; and if Po' < Pa < Po' + d, maintain the current speed (refer to Fig. 3 for the speed adjustment of the DC fan); where, c, d, and e are all pressure value constants, and c > d, and n and m are constants, and n > m.

In the heating mode, the DC fan is an indoor fan, and the heat exchanger corresponding in position to the DC fan is an indoor side condenser. The speed of the DC fan is adjusted according to the comparison between the actual pressure of the heat exchanger and the preset target pressure value, so that in the heating mode, the speed of the indoor side DC fan is kept in a reasonable interval, and the system operates in a better energy equilibrium interval, which avoids energy waste. Further, a speed adjustment range of the DC fan is controlled according to the comparison result between a difference between the actual pressure of the heat exchanger and the preset target pressure value and a preset value, which improves the precision of speed adjustment of the DC fan.

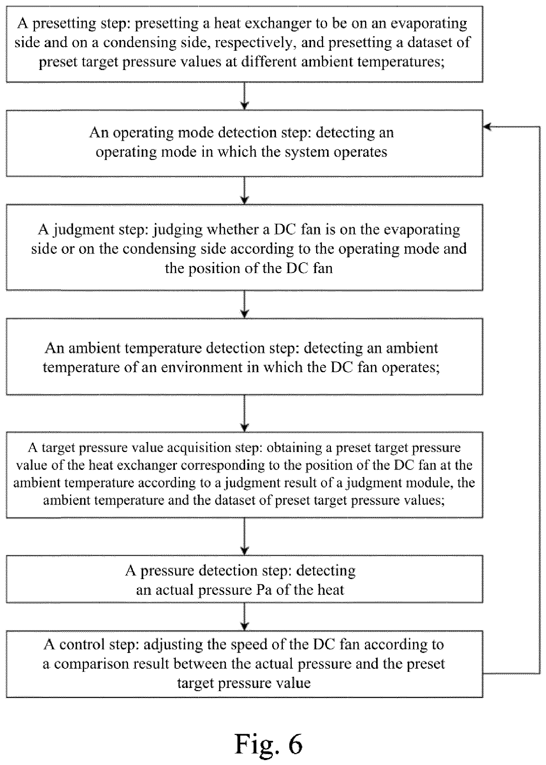

As shown in Fig. 6, corresponding to the control device for the DC fan of the air source heat pump system/air conditioning system of the present invention, the present invention also provides a control method for a DC fan of an air source heat pump system/air conditioning system. The DC fan is disposed corresponding in position to a heat exchanger. The method includes the following steps:
a presetting step: presetting the heat exchanger to be on an evaporating side and on a condensing side, respectively, and presetting a dataset of preset target pressure values at different ambient temperatures;
an operating mode detection step: detecting an operating mode in which the system operates;
a judgment step: judging whether the DC fan is on the evaporating side or on the condensing side according to the operating mode and the position of the DC fan;
an ambient temperature detection step: detecting an ambient temperature of an environment in which the DC fan operates;
a target pressure value acquisition step: according to a judgment result of the judgment module 3, the ambient temperature and the dataset of preset target pressure values, obtaining a preset target pressure value of the heat exchanger corresponding in position to the DC fan at the ambient temperature;
a pressure detection step: detecting an actual pressure Pa of the heat exchanger; and
a control step: adjusting, by the control module 7, the speed of the DC fan according to a comparison result between the actual pressure and the preset target pressure value.

In a preferred embodiment of the present invention, the relationship between the ambient temperature and the target pressure value is a linear relationship or a non-linear relationship.

In a preferred embodiment of the present invention, "adjusting the speed of the DC fan according to the comparison result between the actual pressure and the target pressure value" includes: when in the cooling mode, the DC fan is on the condensing side, the heat exchanger is an outdoor side condenser, the ambient temperature is an outdoor ambient temperature, and the preset target pressure value corresponding to the heat exchanger is Po, if Po + c < Pa, controlling the speed of the DC fan to increase by n revolutions per minute; if Po + d < Pa < Po + c, controlling the speed of the DC fan to increase by m revolutions per minute; if Po - e < Pa < Po, controlling the speed of the DC fan to decrease by m revolutions per minute; if Pa < Po - e, controlling the speed of the DC fan to decrease by n revolutions per minute; and if Po < Pa < Po + d, maintaining the current speed; where, c, d, and e are all pressure value constants, and c > d, and n and m are constants, and n > m.

In a preferred embodiment of the present invention, "adjusting the speed of the DC fan according to the comparison result between the actual pressure and the target pressure value" includes: when in the cooling mode, the DC fan is on the evaporating side, the heat exchanger is an indoor side evaporator, the ambient temperature is an indoor ambient temperature, and the preset target pressure value corresponding to the heat exchanger is Pp', if Pp' + c < Pa, controlling the speed of the DC fan to decrease by n revolutions per minute; if Pp' + d < Pa < Pp' + c, controlling the speed of the DC fan to decrease by m revolutions per minute; if Pp' - e < Pa < Pp', controlling the speed of the DC fan to increase by m revolutions per minute; if Pa < Pp' - e, controlling the speed of the DC fan to increase by n revolutions per minute; and if Pp' < Pa < Pp' + d, maintaining the current speed; where, c, d, and e are all pressure value constants, and c > d, and n and m are constants, and n > m.

In a preferred embodiment of the present invention, "adjusting the speed of the DC fan according to the comparison result between the actual pressure and the target pressure value" includes: when in the heating mode, the DC fan is on the evaporating side, the heat exchanger is an outdoor side evaporator, the ambient temperature is an outdoor ambient temperature, and the preset target pressure value corresponding to the heat exchanger is Pp, if Pp + c < Pa, controlling the speed of the DC fan to decrease by n revolutions per minute; if Pp + d < Pa < Pp + c, controlling the speed of the DC fan to decrease by m revolutions per minute; if Pp - e < Pa < Pp, controlling the speed of the DC fan to increase by m revolutions per minute; if Pa < Pp - e, controlling the speed of the DC fan to increase by n revolutions per minute; and if Pp < Pa < Pp + d, maintaining the current speed; where, c, d, and e are all pressure value constants, and c > d, and n and m are constants, and n > m.

In a preferred embodiment of the present invention, "adjusting the speed of the DC fan according to the comparison result between the actual pressure and the target pressure value" includes: when in the heating mode, the DC fan is on the condensing side, the heat exchanger corresponding in position to the DC fan is an indoor side condenser, the ambient temperature is an indoor ambient temperature, and the preset target pressure value corresponding to the heat exchanger is Po', if Po' + c < Pa, controlling the speed of the DC fan to increase by n revolutions per minute; if Po' + d < Pa < Po' + c, controlling the speed of the DC fan to increase by m revolutions per minute; if Po' - e < Pa < Po', controlling the speed of the DC fan to decrease by m revolutions per minute; if Pa < Po' - e, controlling the speed of the DC fan to decrease by n revolutions per minute; and if Po' < Pa < Po' + d, maintaining the current speed; where, c, d, and e are all pressure value constants, and c > d, and n and m are constants, and n > m.

In a preferred embodiment of the present invention, the method also includes: cyclically performing the operating mode detection step, the judgment step, the ambient temperature detection step, the target pressure value acquisition step, the pressure detection step and the control step, so that the speed of the DC fan can be adjusted in real time, improving the energy efficiency and reliability of the system operation.

The above merely gives preferred embodiments of the present invention, and is not intended to limit the present invention. Any modification, equivalent substitution, and improvement made within the principle of the present invention shall fall in the protection scope of the present invention.
The following clauses set out features of the invention which may or may not presently be claimed in this application, but which may form the basis for future amendment or a divisional application.
1. A control device for a DC fan of an air source heat pump system/air conditioning system, the DC fan being disposed corresponding in position to a heat exchanger, the control device comprising:
   a presetting module configured to preset the heat exchanger to be on an evaporating side and on a condensing side, respectively, and preset a dataset of preset target pressure values at different ambient temperatures;
   a judging module configured to judge whether the DC fan is on the evaporating side or on the condensing side in real time;
   a target pressure value acquisition module communicatively connected with the presetting module and the judgment module, the target pressure value acquisition module configured to, according to a judgment result of the judgment module, an ambient temperature of an environment in which the DC fan operates and the dataset of preset target pressure values, obtain a preset target pressure value of the heat exchanger corresponding in position to the DC fan at the ambient temperature;
   a pressure detection module configured to detect an actual pressure Pa of the heat exchanger in real time; and
   a control module communicatively connected with the pressure detection module and the target pressure value acquisition module, the control module configured to adjust the speed of the DC fan according to a comparison result between the actual pressure Pa and the preset target pressure value.
2. The control device for the DC fan of the air source heat pump system/air conditioning system according to clause 1, wherein the relationship between the ambient temperature and the preset target pressure value is a linear relationship or a non-linear relationship.
3. The control device for the DC fan of the air source heat pump system/air conditioning system according to clause 2, further comprising: an operating mode detection module configured to detect an operating mode in which the air source heat pump system/air conditioning system operates; the judgment module communicatively connected with the operating mode detection module, and the judgment module configured to judge whether the DC fan is on the evaporating side or on the condensing side according to the operating mode and the position of the DC fan.
4. The control device for the DC fan of the air source heat pump system/air conditioning system according to clause 2, wherein the control module is configured to:
   when in the cooling mode, the DC fan is on the condensing side, the heat exchanger is an outdoor side condenser, the ambient temperature is an outdoor ambient temperature, and the preset target pressure value corresponding to the heat exchanger is Po, if Po + c < Pa, control the speed of the DC fan to increase by n revolutions per minute; if Po + d < Pa < Po + c, control the speed of the DC fan to increase by m revolutions per minute; if Po - e < Pa < Po, control the speed of the DC fan to decrease by m revolutions per minute; if Pa < Po - e, control the speed of the DC fan to decrease by n revolutions per minute; and if Po < Pa < Po + d, maintain the current speed; wherein, c, d, and e are all pressure value constants, and c > d, and n and m are constants, and n > m.
5. The control device for the DC fan of the air source heat pump system/air conditioning system according to clause 2, wherein the control module is configured to:
   when in the cooling mode, the DC fan is on the evaporating side, the heat exchanger is an indoor side evaporator, the ambient temperature is an indoor ambient temperature, and the preset target pressure value corresponding to the heat exchanger is Pp', if Pp' + c < Pa, control the speed of the DC fan to decrease by n revolutions per minute; if Pp' + d < Pa < Pp' + c, control the speed of the DC fan to decrease by m revolutions per minute; if Pp' - e < Pa < Pp', control the speed of the DC fan to increase by m revolutions per minute; if Pa < Pp' - e, control the speed of the DC fan to increase by n revolutions per minute; and if Pp' < Pa < Pp' + d, maintain the current speed; wherein, c, d, and e are all pressure value constants, and c > d, and n and m are constants, and n > m.
6. The control device for the DC fan of the air source heat pump system/air conditioning system according to clause 2, wherein the control module is configured to:
   when in the heating mode, the DC fan is on the evaporating side, the heat exchanger is an outdoor side evaporator, the ambient temperature is an outdoor ambient temperature, and the preset target pressure value corresponding to the heat exchanger is Pp, if Pp + c < Pa, control the speed of the DC fan to decrease by n revolutions per minute; if Pp + d < Pa < Pp + c, control the speed of the DC fan to decrease by m revolutions per minute; if Pp - e < Pa < Pp, control the speed of the DC fan to increase by m revolutions per minute; if Pa < Pp - e, control the speed of the DC fan to increase by n revolutions per minute; and if Pp < Pa < Pp + d, maintain the current speed; wherein, c, d, and e are all pressure value constants, and c > d, and n and m are constants, and n > m.
7. The control device for the DC fan of the air source heat pump system/air conditioning system according to clause 2, wherein the control module is configured to:
   when in the heating mode, the DC fan is on the condensing side, the heat exchanger is an indoor side condenser, the ambient temperature is an indoor ambient temperature, and the preset target pressure value corresponding to the heat exchanger is Po', if Po' + c < Pa, control the speed of the DC fan to increase by n revolutions per minute; if Po' + d < Pa < Po' + c, control the speed of the DC fan to increase by m revolutions per minute; if Po' - e < Pa < Po', control the speed of the DC fan to decrease by m revolutions per minute; if Pa < Po' - e, control the speed of the DC fan to decrease by n revolutions per minute; and if Po' < Pa < Po' + d, maintain the current speed; wherein, c, d, and e are all pressure value constants, and c > d, and n and m are constants, and n > m.
8. A control method for a DC fan of an air source heat pump system/air conditioning system, the DC fan being disposed corresponding in position to a heat exchanger, the control method comprising the following steps:
   a presetting step: presetting the heat exchanger to be on an evaporating side and on a condensing side, respectively, and presetting a dataset of preset target pressure values at different ambient temperatures;
   a judgment step: judging whether the DC fan is on the evaporating side or on the condensing side;
   a target pressure value acquisition step: according to a judgment result of the judgment step, an ambient temperature of an environment in which the DC fan operates and the dataset of preset target pressure values, obtaining a preset target pressure value of the heat exchanger corresponding in position to the DC fan at the ambient temperature;
   a pressure detection step: detecting an actual pressure Pa of the heat exchanger; and
   a control step: adjusting, by a control module, the speed of the DC fan according to a comparison result between the actual pressure Pa and the preset target pressure value.
9. The control method for the DC fan of the air source heat pump system according to clause 8, wherein the relationship between the ambient temperature and the target pressure value is a linear relationship or a non-linear relationship.
10. The control method for the DC fan of the air source heat pump system according to clause 8, further comprising:
   a detection step: detecting an operating mode in which the air source heat pump system/air conditioning system operates;
   the judgment step judging whether the DC fan is on the evaporating side or on the condensing side according to the operating mode and the position of the DC fan.

## Claims

1. A control device for a DC fan of an air source heat pump system/air conditioning system, the DC fan being disposed corresponding in position to a heat exchanger, the control device comprising:
a presetting module (1) configured to preset the heat exchanger to be on an evaporating side and on a condensing side, respectively, and preset a dataset of preset target pressure values at different ambient temperatures;
a judging module (3) configured to judge whether the DC fan is on the evaporating side or on the condensing side in real time;
a target pressure value acquisition module (5) communicatively connected with the presetting module (1) and the judgment module (3), the target pressure value acquisition module (5) configured to, according to a judgment result of the judgment module, an ambient temperature of an environment in which the DC fan operates and the dataset of preset target pressure values, obtain a preset target pressure value of the heat exchanger corresponding in position to the DC fan at the ambient temperature;
a pressure detection module (6) configured to detect an actual pressure Pa of the heat exchanger in real time; and
a control module (7) communicatively connected with the pressure detection module (6) and the target pressure value acquisition module (5), the control module (7) configured to adjust the speed of the DC fan according to a comparison result between the actual pressure Pa and the preset target pressure value.

2. The control device for a DC fan of an air source heat pump system/air conditioning system according to claim 1, wherein the relationship between the ambient temperature and the preset target pressure value is a linear relationship or a non-linear relationship.

3. The control device for a DC fan of an air source heat pump system/air conditioning system according to claim 1 or 2, further comprising: an operating mode detection module (2) configured to detect an operating mode in which the air source heat pump system/air conditioning system operates; the judgment module (3) communicatively connected with the operating mode detection module (2), and the judgment module (3) configured to judge whether the DC fan is on the evaporating side or on the condensing side according to the operating mode and the position of the DC fan.

4. The control device for a DC fan of an air source heat pump system/air conditioning system according to any preceding claim, wherein the control module (7) is configured to:
when in the cooling mode, the DC fan is on the condensing side, the heat exchanger is an outdoor side condenser, the ambient temperature is an outdoor ambient temperature, and the preset target pressure value corresponding to the heat exchanger is Po, if Po + c < Pa, control the speed of the DC fan to increase by n revolutions per minute; if Po + d < Pa < Po + c, control the speed of the DC fan to increase by m revolutions per minute; if Po - e < Pa < Po, control the speed of the DC fan to decrease by m revolutions per minute; if Pa < Po - e, control the speed of the DC fan to decrease by n revolutions per minute; and if Po < Pa < Po + d, maintain the current speed; wherein, c, d, and e are all pressure value constants, and c > d, and n and m are constants, and n > m.

5. The control device for a DC fan of an air source heat pump system/air conditioning system according to any preceding claim, wherein the control module (7) is configured to:
when in the cooling mode, the DC fan is on the evaporating side, the heat exchanger is an indoor side evaporator, the ambient temperature is an indoor ambient temperature, and the preset target pressure value corresponding to the heat exchanger is Pp', if Pp' + c < Pa, control the speed of the DC fan to decrease by n revolutions per minute; if Pp' + d < Pa < Pp' + c, control the speed of the DC fan to decrease by m revolutions per minute; if Pp' - e < Pa < Pp', control the speed of the DC fan to increase by m revolutions per minute; if Pa < Pp' - e, control the speed of the DC fan to increase by n revolutions per minute; and if Pp' < Pa < Pp' + d, maintain the current speed; wherein, c, d, and e are all pressure value constants, and c > d, and n and m are constants, and n > m.

6. The control device for a DC fan of an air source heat pump system/air conditioning system according to any preceding claim, wherein the control module (7) is configured to:
when in the heating mode, the DC fan is on the evaporating side, the heat exchanger is an outdoor side evaporator, the ambient temperature is an outdoor ambient temperature, and the preset target pressure value corresponding to the heat exchanger is Pp, if Pp + c < Pa, control the speed of the DC fan to decrease by n revolutions per minute; if Pp + d < Pa < Pp + c, control the speed of the DC fan to decrease by m revolutions per minute; if Pp - e < Pa < Pp, control the speed of the DC fan to increase by m revolutions per minute; if Pa < Pp - e, control the speed of the DC fan to increase by n revolutions per minute; and if Pp < Pa < Pp + d, maintain the current speed; wherein, c, d, and e are all pressure value constants, and c > d, and n and m are constants, and n > m.

7. The control device for a DC fan of an air source heat pump system/air conditioning system according to any preceding claim, wherein the control module (7) is configured to:
when in the heating mode, the DC fan is on the condensing side, the heat exchanger is an indoor side condenser, the ambient temperature is an indoor ambient temperature, and the preset target pressure value corresponding to the heat exchanger is Po', if Po' + c < Pa, control the speed of the DC fan to increase by n revolutions per minute; if Po' + d < Pa < Po' + c, control the speed of the DC fan to increase by m revolutions per minute; if Po' - e < Pa < Po', control the speed of the DC fan to decrease by m revolutions per minute; if Pa < Po' - e, control the speed of the DC fan to decrease by n revolutions per minute; and if Po' < Pa < Po' + d, maintain the current speed; wherein, c, d, and e are all pressure value constants, and c > d, and n and m are constants, and n > m.

8. A control method for a DC fan of an air source heat pump system/air conditioning system, the DC fan being disposed corresponding in position to a heat exchanger, the control method comprising the following steps:
a presetting step: presetting the heat exchanger to be on an evaporating side and on a condensing side, respectively, and presetting a dataset of preset target pressure values at different ambient temperatures;
a judgment step: judging whether the DC fan is on the evaporating side or on the condensing side;
a target pressure value acquisition step: according to a judgment result of the judgment step, an ambient temperature of an environment in which the DC fan operates and the dataset of preset target pressure values, obtaining a preset target pressure value of the heat exchanger corresponding in position to the DC fan at the ambient temperature;
a pressure detection step: detecting an actual pressure Pa of the heat exchanger; and
a control step: adjusting, by a control module (7), the speed of the DC fan according to a comparison result between the actual pressure Pa and the preset target pressure value.

9. The control method for a DC fan of an air source heat pump system according to claim 8, wherein the relationship between the ambient temperature and the target pressure value is a linear relationship or a non-linear relationship.

10. The control method for a DC fan of an air source heat pump system according to claim 8 or 9, further comprising:
a detection step: detecting an operating mode in which the air source heat pump system/air conditioning system operates;
the judgment step judging whether the DC fan is on the evaporating side or on the condensing side according to the operating mode and the position of the DC fan.
